# FASCICULE DE BREVET EUROPEEN

(11) **EP 2 918 525 B1**
(45) Date de publication et mention de la délivrance du brevet: **05.10.2016**
(21) Numéro de dépôt: 15159041.1
(22) Date de dépôt: 13.03.2015
(51) Int. Cl.: B65G 59/04, B65G 59/00

(54) **PROCÉDÉ POUR DÉPILER DES OBJETS STOCKÉS SUR UN SUPPORT ET DISPOSITIF ASSOCIÉ**
VORRICHTUNG ZUM ENTHAAREN VON GEGENSTÄNDEN, DIE AUF EINER HALTERUNG GELAGERT WERDEN, UND ENTSPRECHENDE VORRICHTUNG
METHOD FOR DESTACKING OBJECTS STORED ON A MOUNTING AND ASSOCIATED DEVICE

(30) Priorité: 13.03.2014 FR 1452095
(43) Date de publication de la demande: 16.09.2015
(73) Titulaire: Cetec Industrie Conditionnement, 24052 Perigueux CT Cedex 9 (FR)
(72) Inventeur: Labrue, Régis, 24000 PERIGUEUX (FR); Gerbeaud, Alain, 24600 RIBERAC (FR)
(74) Mandataire: Fantin, Laurent

(56) Documents cités:
- JP-A- H1 120 948
- JP-A- H06 255 788
- JP-A- H08 168 984
- JP-A- 2004 155 540
- JP-A- 2007 254 128
- US-A1- 2013 096 713

## Description

La présente invention se rapporte à un procédé pour dépiler des objets tels que des sacs ou des flans de caisses en carton stockés sur un support ainsi qu'à un dispositif associé.

Dans le domaine du conditionnement, on connaît les chaînes d'ensachage qui permettent de remplir des sacs vides avec des produits en vrac. La présente invention se rapporte plus précisément au poste d'alimentation en sacs vides d'une chaîne d'ensachage.

De manière connue, un sac est constitué d'une enveloppe en matériau souple formant un tube dont une des extrémités, le fond, est fermée, alors que l'autre extrémité est ouverte préalablement à son remplissage et n'est fermée qu'après le remplissage.

L'enveloppe peut être réalisée à partir d'au moins une feuille ou d'un complexe de feuilles de matières diverses, par exemple en papier, en coton, en matière plastique ou autre.

Généralement, les sacs sont fabriqués sur un premier site puis sont remplis sur un second site.

Sur le premier site, ils peuvent être également imprimés de manière à apposer sur les faces des sacs les informations adéquates relatives au produit qui y sera conditionné.

A l'issue de la chaîne de fabrication et d'impression, les sacs sont stockés selon un plan de palettisation (appelé par la suite plan de stockage) sur des palettes afin d'être transférés vers le site de remplissage.

Les sacs sortent de la chaîne de fabrication et d'impression les uns à la suite des autres, tous orientés de la même manière.

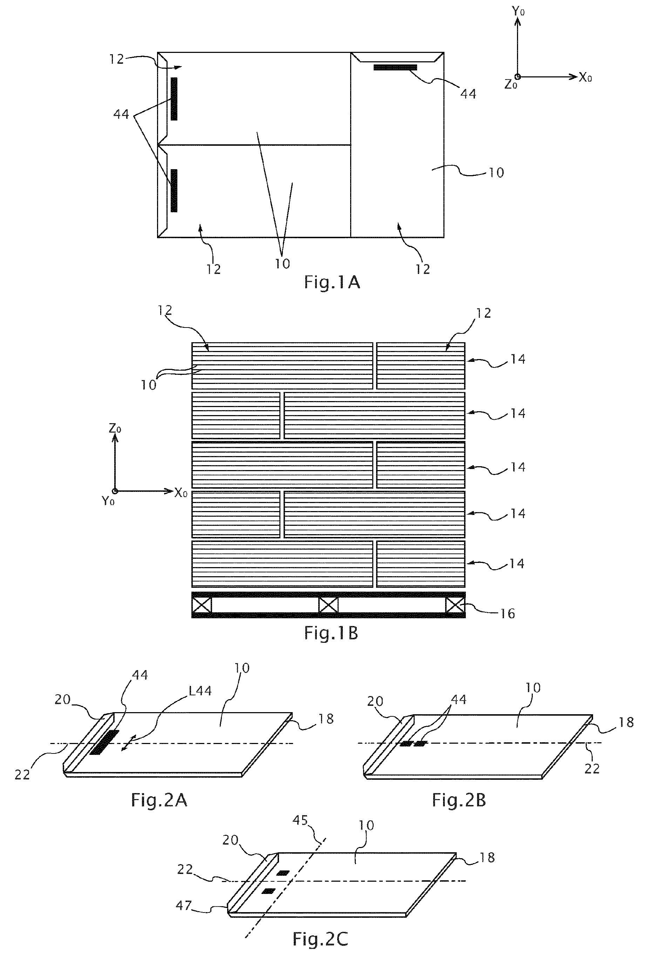

Comme illustré sur les figures 1A et 1B, les sacs 10 sont alors regroupés par piles 12 qui sont regroupées par couches 14, les couches étant empilées les unes sur les autres sur un support 16 telle qu'une palette.

Les sacs d'une même pile sont orientés tous de la même manière. En théorie, les piles comprennent toutes le même nombre de sacs.

Comme illustré sur les figures 1A et 1B, les piles 12 d'une même couche ne sont pas orientées toutes de la même manière si bien que les sacs d'une pile à l'autre ne sont pas orientés de la même manière.

Enfin, d'une couche à l'autre, les piles 12 ne sont pas agencées de la même manière.

Ces changements d'orientation et d'agencement des piles d'une couche à l'autre sont nécessaires pour assurer la stabilité de la palette.

La formation d'une palette de sacs est automatisée et réalisée par un automate qui respecte un plan de stockage.

Le plan de stockage répertorie les informations suivantes :
- le nombre de couches,
- pour chaque couche, le nombre de piles ainsi que le positionnement et l'orientation de chaque pile,
- pour chaque pile, le nombre de sacs et l'orientation des sacs, le nombre de sacs étant généralement identique pour toutes les piles, les sacs d'une même pile étant tous orientés de la même manière.

Au niveau de la chaîne d'ensachage, les sacs doivent être introduits les uns à la suite des autres et être impérativement orientés tous de la même manière.

A cet effet, un poste d'alimentation d'une chaîne d'ensachage comprend un automate susceptible de saisir un sac au niveau de la palette de sacs, de le transférer vers la chaîne d'ensachage en ayant pris soin de l'orienter correctement.

Selon un mode de réalisation, cet automate comprend un préhenseur relié à un robot cartésien de manière à obtenir au moins les mouvements suivants :
- une rotation selon un axe vertical pour assurer l'orientation,
- une translation selon un axe vertical pour tenir compte des différentes hauteurs des sacs sur la palette,
- une translation horizontale selon une première direction, et
- une translation selon une seconde direction perpendiculaire à la première direction, ces deux translations horizontales permettant de tenir compte des différentes positions des piles au niveau des couches.

Connaissant le plan de stockage, l'automate connait en théorie la position de chaque sac de la palette et devrait donc pouvoir saisir correctement chaque sac et le déposer orienté correctement au niveau de la chaîne d'ensachage selon un plan de déstockage.

Toutefois, certains aléas peuvent conduire à complexifier l'étape de dépilage des sacs.

Ainsi, si la palette n'est pas correctement orientée, le plan de déstockage ne peut pas être appliqué.

De même, il peut arriver pour diverses raisons (sacs collés ou retrait manuel) que les piles ne comprennent pas le nombre théorique de sacs. De plus, les sacs peuvent glisser pendant le transport.

Par conséquent, compte tenu de ces aléas, le plan de déstockage n'est pas appliqué et l'automate comprend au niveau du préhenseur une caméra permettant de filmer le dessus de la palette de sacs, un logiciel de reconnaissance d'image permettant de déterminer la position des sacs et leurs orientations.

Ainsi, préalablement à la saisie d'un sac, la caméra saisit une image du dessus de la palette. Cette image est alors analysée par le logiciel de reconnaissance d'image afin de déterminer la position d'un sac à saisir et son orientation. La position du sac étant connue, l'automate détermine sa trajectoire pour venir à l'aplomb du sac à saisir, le saisir puis le transporter jusqu'à la chaîne d'ensachage en ayant pris soin éventuellement de modifier son orientation si nécessaire.

Ce mode opératoire n'est pas pleinement satisfaisant pour les raisons suivantes :

En premier lieu, les logiciels de reconnaissance d'image sont relativement complexe à paramétrer et nécessitent que l'image saisie soit la plus régulière possible en terme notamment de rendu. Or, en pratique le rendu des images n'est pas régulier, la lumière environnante variant en fonction notamment des heures de la journée, les sacs réfléchissant plus ou moins cette lumière en fonction du matériau utilisé pour les fabriquer. De plus, dans certaines conditions ou pour certains sacs (trop réfléchissants), ce mode opératoire nécessitant une analyse d'image ne peut pas être mis en oeuvre.

Selon un aspect économique, les logiciels de reconnaissance d'image sont relativement onéreux.

Enfin, même si les logiciels de reconnaissance d'image sont de plus en plus performants, l'analyse de l'image tend à ralentir les cadences de dépilage des sacs.

US 2013/0096713 A1 décrit un procédé selon le préambule de la revendication 1.

Aussi, la présente invention vise à remédier aux inconvénients de l'art antérieur.

A cet effet, l'invention a pour objet un procédé de dépilage d'objets stockés selon plusieurs piles, chaque pile comprenant plusieurs objets, lesdits objets étant orientés de la même manière dans chaque pile, ledit procédé de dépilage consistant à saisir au moyen d'au moins un préhenseur, piloté par un système de contrôle, un par un les objets afin de les déposer selon une orientation donnée au niveau d'une sortie, chaque objet comprenant au moins une marque positionnée de manière identique pour tous les objets, caractérisé en ce que le procédé consiste à utiliser des moyens de détection de marque comprenant au moins un premier capteur configuré pour détecter une variation d'une grandeur physique lorsqu'une marque passe dans son champ de mesure, à déplacer ledit premier capteur selon une trajectoire sécante avec la position théorique de la marque de l'objet de la pile en cours de dépilement afin de déterminer si la pile en cours de dépilement est terminée.

L'invention a également pour objet un poste d'alimentation selon la revendication 6.

D'autres caractéristiques et avantages ressortiront de la description qui suivre de l'invention, description donnée à titre d'exemple uniquement, en regard des dessins annexés sur lesquels :
- La figure 1A est une vue de dessus d'une palette de sacs selon un premier arrangement,
- La figure 1B est une vue latérale de la palette illustrée sur la figure 1A,
- La figure 2A est une vue d'un sac selon une première variante de l'invention,
- La figure 2B est une vue d'un sac selon une deuxième variante de l'invention,
- La figure 2C est une vue d'un sac selon une troisième variante de l'invention,
- Les figures 3A à 3D sont des vues de dessus d'une même palette de sacs selon un deuxième arrangement, ladite palette étant orientée différemment d'une figure à l'autre,
- La figure 4 est une représentation schématique d'un dispositif selon l'invention,
- La figure 5 est une vue en perspective d'un dispositif pour dépiler des sacs selon un mode de réalisation de l'invention,
- Les figures 6A et 6B sont des vues latérales d'une partie d'un dispositif selon une variante de l'invention illustrant deux étapes permettant de déterminer la fin d'une pile de sacs.

Sur les figures 1A et 1B, on a représenté des sacs 10 stockés sur un support 16, par exemple une palette.

Les sacs 10 sont stockés à plat. Ils sont regroupés par piles 12 qui sont regroupées par couches 14, les couches étant empilées les unes sur les autres sur le support 16.

Comme illustré sur les figures 2A, 2B et 2C, chaque sac 10 comprend un fond 18, une ouverture 20 et un axe longitudinal 22 perpendiculaire aux bords délimitant le fond et l'ouverture.

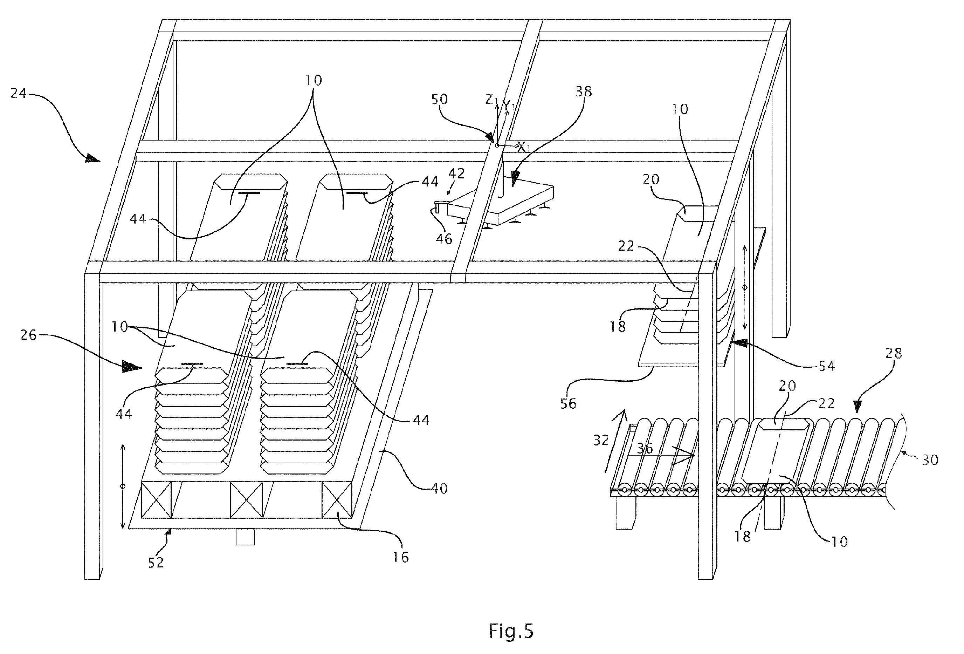

Sur la figure 5, on a représenté un dispositif 24 pour dépiler des sacs 10 qui comprend une zone de dépilage 26 au niveau de laquelle est positionné un support 16 et une sortie 28 au niveau de laquelle les sacs sont dépilés et sont positionnés selon une orientation donnée. Selon l'exemple proposé, la sortie du dispositif 24 correspond à l'alimentation en sacs d'une chaîne d'ensachage matérialisée par un convoyeur à rouleaux 30.

Au niveau de la sortie 28, les sacs 10 sont orientés tous de la même manière.

L'orientation d'un sac se caractérise par la direction de son axe longitudinal 22 et le sens du sac à savoir la position de l'ouverture 20 par rapport au fond 18 selon l'axe longitudinal 22. Ainsi, l'axe longitudinal 22 de chaque sac doit être parallèle à une direction de sortie matérialisée par une flèche 32 sur la figure 5 et l'ouverture 20 positionnée selon un sens de sortie matérialisé par la flèche 32, l'ouverture 20 étant positionnée au niveau de la tête de la flèche 32 et le fond 18 au niveau de la queue de la flèche 32.

Selon les cas, la direction de sortie peut être parallèle ou perpendiculaire à la direction de défilement des sacs au niveau de la sortie. Sur la figure 5, la direction de sortie 32 est perpendiculaire à la direction de défilement 36.

Selon un premier agencement illustré sur les figures 1A et 1B, chaque couche 14 de piles 12 de sacs comprend trois piles 12. Chaque pile 12 comprend un nombre théorique N de sacs 10.

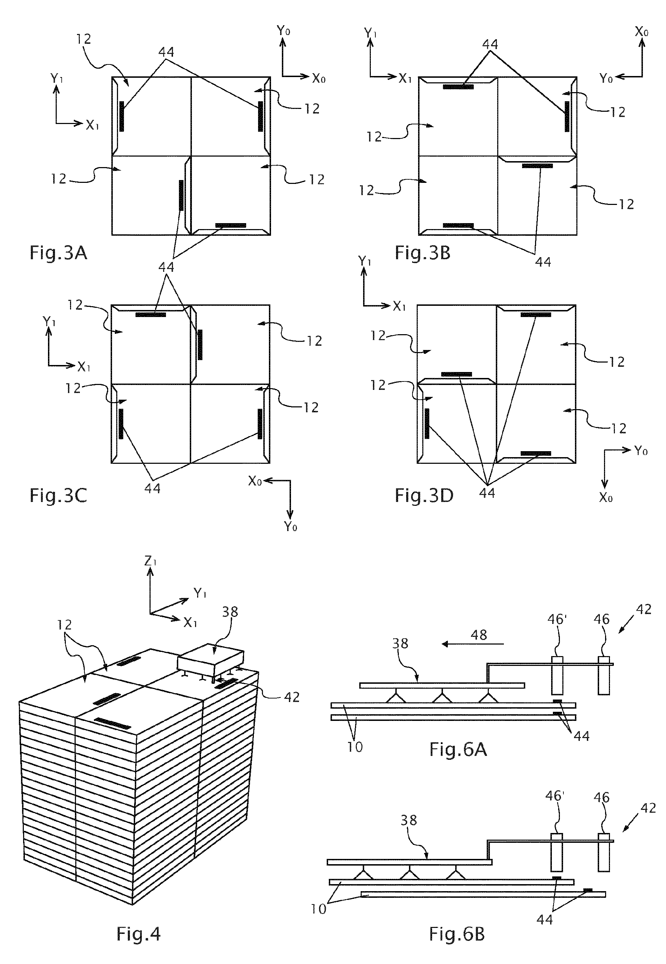

Selon un deuxième agencement illustré sur les figures 3A à 3D, chaque couche 14 comprend quatre piles de sacs.

Bien entendu, l'invention n'est pas limitée aux agencements précédemment décrits.

Les sacs sont stockés sur le support selon un plan de stockage.

Ce plan de stockage répertorie :
- Le nombre de couches,
- Pour chaque couche, le nombre de piles, le positionnement de chaque pile,
- Pour chaque pile, le nombre de sacs et l'orientation de l'ouverture de chaque sac.

Le positionnement et l'orientation des sacs sont définis par rapport à un repère orthonormé X₀,Y₀,Z₀ du plan de stockage.

Généralement, le support 16 comprend une surface supérieure plane (sur laquelle sont empilés les sacs) qui correspond au plan X₀Y₀, la direction Z₀ étant perpendiculaire à cette surface supérieure du support 16. De plus, la surface supérieure est carrée ou rectangulaire, la direction X₀ étant parallèle à certains bords de la surface supérieure et la direction Y₀ parallèle à d'autres bords. Dans la mesure où les bords des sacs sont parallèles aux bords de la surface supérieure du support 16, les bords des sacs sont parallèles à l'axe X₀ ou Y₀. Généralement, les sacs d'une même pile sont tous orientés de la même manière et le nombre de sacs par pile est en théorie identique.

Le plan de déstockage correspond au plan de stockage, seul l'ordre de préhension des sacs étant inversé. Les sacs sont positionnés et orientés selon un repère identique au repère X₀,Y₀,Z₀ du plan de stockage.

De manière connue, le dispositif de dépilage 24 comprend au moins un préhenseur 38 configuré pour se déplacer dans un repère X₁,Y₁,Z₁ du dispositif de dépilage.

Pour la description, la direction X₁ est disposée dans un plan parallèle au plan de dépose des sacs et parallèle à la direction de défilement 36. La direction Y₁ est disposée dans un plan de dépose des sacs et perpendiculaire à la direction de défilement 36. De préférence, le plan de dépose des sacs correspond au plan horizontal. Dans ce cas, la direction Z₁ correspond à la direction verticale.

La zone de dépilage 26 comprend une surface de dépose 40 plane sur laquelle est posé un support 16 qui est de préférence disposé dans un plan X₁Y₁, soit à l'horizontale.

Selon l'invention, le préhenseur 38 dépile les sacs en appliquant le plan de déstockage. A cet effet, il comprend des moyens pour déterminer la position du repère X₀,Y₀,Z₀ du plan de stockage dans le repère X₁,Y₁,Z₁ du dispositif de dépilage.

Généralement, la surface supérieure du support 16 et la surface de dépose 40 sont parallèles si bien que les axes Z₀ et Z₁ sont parallèles.

Avantageusement, le dispositif de dépilage comprend des moyens pour positionner le support afin que l'axe X₀ soit parallèle à l'axe X₁ ou Y₁.

Dans ce cas, comme illustré sur les figures 3A à 3D, le support 16 peut être orienté de manière à ce que :
- l'axe X₀ soit parallèle à X₁ et dans le même sens comme illustré sur la figure 3A,
- l'axe X₀ soit parallèle à Y₁ et dans le même sens comme illustré sur la figure 3B,
- l'axe X₀ soit parallèle à X₁ et en sens opposé comme illustré sur la figure 3C, ou
- l'axe X₀ soit parallèle à Y₁ et en sens opposé comme illustré sur la figure 3D.

Dans le cas d'un support rectangulaire, le dispositif de dépilage peut comprendre un détrompeur afin que l'axe X₀ soit parallèle à l'axe X₁.

Dans ce cas, le support 16 peut être orienté de manière à ce que :
- l'axe X₀ soit parallèle à X₁ et dans le même sens, ou
- l'axe X₀ soit parallèle à X₁ et en sens opposé.

Les moyens pour déterminer la position du repère X₀,Y₀,Z₀ du plan de stockage dans le repère X₁,Y₁,Z₁ du dispositif de dépilage comprennent des moyens 42 de détection d'une marque sur un sac. En parallèle, chaque sac 10 comprend au moins une marque 44. Tous les sacs d'une même palette comprennent la même ou les mêmes marques.

De préférence, la marque 44 se présente sous la forme d'un repère dont la couleur offre un contraste de couleur avec le reste du sac.

Avantageusement, la ou les marques 44 sont positionnées sur le sac de manière à identifier l'orientation du sac.

Selon une première variante illustrée sur la figure 2A, le sac 10 comprend une marque plus longue que large, par exemple rectangulaire et l'angle formé par la direction de la marque L44 correspondant à sa longueur et l'axe longitudinal 22 est constant d'un sac à l'autre. De préférence, la direction de la marque L44 est perpendiculaire à l'axe longitudinal 22. Toutefois, elle pourrait être parallèle à l'axe longitudinal 22. Selon un mode de réalisation, la marque 44 a une largeur de 1 à 2 cm et une longueur de l'ordre de 5 à 15 cm.

Selon une deuxième variante illustrée sur la figure 2B, le sac comprend deux marques 44, de préférence identiques (carrées selon l'exemple illustré), décalées selon une direction de décalage et l'angle formé par la direction de décalage et l'axe longitudinal 22 est constant d'un sac à l'autre. De préférence, la direction de décalage est parallèle à l'axe longitudinal 22.

Selon une troisième variante illustrée sur la figure 2C, la direction de décalage des deux marques 44 est perpendiculaire à l'axe longitudinal 22.

Selon une conception, chaque sac comprend au moins une ligne de pliage 45 permettant à la tête du sac d'être rabattue et collée après le remplissage du sac de manière à le fermer.

Avantageusement, selon cette conception, la ou les marques 44 est ou sont disposée(s) entre le bord 47 de l'ouverture 20 et la ligne de pliage 45.

Pour connaître le sens du sac et la position de l'ouverture par rapport au fond selon l'axe longitudinal 22, la ou les marques 44 ne sont pas positionnées en position médiane par rapport au fond 18 et à l'ouverture 20. Avantageusement, la ou les marques sont disposées à proximité de l'ouverture 20. Dans ce cas, lorsque le sac est plié pour fermer l'ouverture, la ou les marques ne sont plus visibles après la fermeture du sac.

Selon un premier mode opératoire, avant de commencer le dépilage des sacs, les moyens 42 de détection prennent une image du dessus du support 16 sur lequel sont empilés les sacs. En suivant, cette image est analysée pour déterminer la position du repère X₀,Y₀,Z₀ du plan de stockage dans le repère X₁,Y₁,Z₁ en fonction de la position des marques. Avantageusement, l'image est comparée à une image de référence afin de déterminer le décalage angulaire entre le repère X₀,Y₀,Z₀ du plan de stockage et le repère X₁Y₁Z₁ du dispositif de dépilage, les axes Zo et Z₁ étant parallèles.

Connaissant ce décalage angulaire, le dispositif de dépilage peut appliquer le plan de déstockage en tenant compte de ce décalage angulaire pour orienter correctement les sacs.

Contrairement à l'art antérieur, le procédé n'utilise qu'une seule analyse d'image au début du procédé. En suivant, il peut appliquer le plan de déstockage et n'a pas besoin de faire une analyse d'image à chaque sac saisi. Selon un autre avantage, l'analyse de l'image est simplifiée dans la mesure où il est plus simple de repérer sur une image des marques avec un contraste de couleur élevée par rapport au reste du sac que des bords de sacs et des ouvertures.

Selon un autre mode opératoire préféré, il est possible de supprimer toute analyse d'images. Selon ce mode opératoire, les moyens 42 de détection se présentent sous la forme d'un capteur mobile 46 de détection de marque et susceptible de se déplacer le long d'au moins une direction de déplacement, notamment selon la direction X₁ ou Y₁. Ce mouvement permet de déterminer la position des marques 44 selon la direction de déplacement. Avantageusement, le capteur 46 de détection est solidaire du préhenseur 38.

Le dispositif de dépilage comprend en outre des moyens pour comparer la position des marques 44 relevée par le capteur 46 de détection et la position des marques 44 dans le plan de déstockage afin de déterminer le décalage angulaire entre le repère X₀,Y₀,Z₀ du plan de stockage et le repère X₁,Y₁,Z₁ du dispositif de dépilage, les axes Z₀ et Z₁ étant parallèles.

Connaissant ce décalage angulaire, le dispositif de dépilage peut appliquer le plan de déstockage en tenant compte de ce décalage angulaire pour orienter correctement les sacs.

Afin d'assurer le contrôle des mouvements du ou des préhenseur(s), le dispositif de dépilage comprend un système de contrôle.

Ce système de contrôle comprend au moins une mémoire et des moyens de calcul.

De préférence, le plan de stockage est stocké dans la mémoire du système de contrôle et ce dernier est configuré pour contrôler les mouvements du ou des préhenseur(s) afin d'assurer le dépilement des sacs du support en fonction du plan de stockage.

Le dispositif de dépilage précédemment décrit assure un dépilage fiable lorsque le nombre de sacs de chaque pile est conforme à celui du plan de déstockage.

Comme illustré sur les figures 6A et 6B, pour remédier aux aléas relatifs au nombre de sacs par pile, les moyens de détection de marque comprennent au moins un capteur 46 mobile au-dessus des sacs, et plus particulièrement au-dessus de la pile de sacs en cours de dépilement.

Connaissant à partir du plan de stockage la position théorique de la marque 44 apposée sur le sac de la pile en cours de dépilement, le capteur 46 se déplace de manière à ce que sa trajectoire soit sécante avec ladite position.

De préférence, le système de contrôle pilote les mouvements du capteur 46. Selon un premier mode de réalisation, le capteur 46 est solidaire d'un mobile indépendant d'un préhenseur 38. Avantageusement, le capteur 46 est relié au préhenseur 38.

En se déplaçant dans un plan parallèle à la surface du sac au niveau de laquelle est apposée la marque, le capteur 46 est configuré pour détecter une variation d'une grandeur physique lorsque la marque 44 passe dans son champ de mesure.

De préférence, le capteur 46 comprend un émetteur d'un signal et un récepteur dudit signal. Lorsque la marque passe dans le champ de mesure du capteur 46, le récepteur reçoit un signal émis par l'émetteur qui est différent de celui reçu lorsque la marque 44 est en dehors du champ de mesure. Selon un mode de réalisation, le capteur 46 est un capteur lumineux et la marque 44 est une marque avec un contraste de couleur important par rapport au reste de la surface du sac sur laquelle elle est apposée. D'autres couples capteur/marque peuvent être envisagés. Ainsi, le capteur peut être de type électromagnétique et la marque peut être en un matériau adapté pour modifier un champ électromagnétique.

Le capteur 46 transmet une information au système de contrôle lorsque la marque est dans son champ de mesure.

Selon l'invention, le système de contrôle pilote le préhenseur de manière à ce que ce dernier saisisse les sacs un par un en fonction du plan de stockage.

Entre deux prises de sacs, le capteur 46 se déplace au-dessus des sacs. Sa trajectoire est déterminée par le système de contrôle afin que ladite trajectoire soit sécante avec la position théorique de la marque apposée sur chacun des sacs de la pile en cours de dépilement.

Lors de ce déplacement, si le capteur 46 ne détecte aucune marque cela signifie que la pile en cours de dépilement est terminée et que le système de contrôle peut commander le préhenseur de manière à ce qu'il dépile la pile suivante.

Lors de ce déplacement, si le capteur 46 détecte une marque, le système de contrôle connaissant la position du capteur 46 au moment de la détection de la marque détermine la position de la marque détectée.

Si la position de la marque détectée est identique à la position théorique de la marque d'un sac de la pile en cours de dépilement, cela signifie que la pile en cours de dépilement n'est pas terminée et que le système de contrôle peut commander le préhenseur afin qu'il dépile toujours la même pile.

Si la position de la marque détectée n'est pas identique à la position théorique de la marque d'un sac de la pile en cours de dépilement, cela signifie que la pile en cours de dépilement est terminée et que le système de contrôle peut commander le préhenseur afin qu'il dépile la pile suivante.

Avantageusement, pour ne pas réduire la vitesse d'exécution, la détection de la position réelle d'une marque est réalisée seulement à l'approche de la fin de chaque pile.

Pour simplifier les calculs, le champ de mesure du capteur est disposé sous et à la verticale du capteur 46. Ainsi, la marque est détectée lorsqu'elle se trouve à l'aplomb du capteur 46.

Lorsque le capteur 46 est solidaire du préhenseur 38, il est positionné sur le préhenseur de manière à ce que son champ de mesure n'interfère pas avec le sac saisi par le préhenseur. Lorsque le champ de mesure du capteur est disposé sous et à la verticale du capteur 46, ce dernier est décalé vers l'extérieur par rapport à l'aplomb des bords du sac saisi par le préhenseur 38. De plus, le capteur 46 est positionné sur le préhenseur de telle façon que lors du mouvement du préhenseur 38 de la pile en cours de dépilement vers la sortie, ledit capteur passe à l'aplomb de la position théorique de la marque du sac de la pile en cours de dépilement.

Selon un autre mode de réalisation, le dispositif de dépilage comprend un premier capteur 46 comme précédemment décrit et un deuxième capteur 46' prévu pour affiner la position du préhenseur par rapport au prochain sac à saisir. Les capteurs 46, 46' sont décalés d'un écart constant dans un plan parallèle à la surface des sacs à dépiler.

De préférence, les deux capteurs 46, 46' sont identiques.

Les deux capteurs 46, 46' sont mobiles selon une direction de détection 48 qui est sécante avec la position théorique de la marque 44 du sac de la pile en cours de dépilement. Les deux capteurs 46, 46' sont décalés selon cette direction de détection 48.

De préférence, les deux capteurs 46, 46' sont solidaires du préhenseur 38.

Selon un mode opératoire, chaque sac est saisi de manière à ce que le deuxième capteur 46' soit disposé à l'aplomb de la marque du sac saisi. En suivant, le préhenseur 38 se décale selon la direction de détection 48. Si le premier capteur 46 détecte une marque 44, cela signifie que la pile n'est pas terminée comme illustré sur la figure 6B. Si le premier capteur 46 ne détecte pas de marque 44, cela signifie que la pile est terminée et que le préhenseur 38 peut dépiler la pile suivante.

Selon ce mode opératoire, le préhenseur suit le plan de déstockage en adaptant le nombre de sacs par pile en fonction des informations transmises par les capteurs 46,46'.

Selon un mode de réalisation préféré et illustré sur la figure 5, le dispositif de dépilage comprend un préhenseur 38 relié à un robot 50 cartésien permettant au préhenseur 38 de se déplacer selon les directions X₁ et Y₁, dans un plan horizontal au-dessus des objets

En complément, il comprend un premier ascenseur 52 permettant de soulever le support 16, un second ascenseur 54 avec une plateforme 56 sur laquelle sont entassés les sacs dépilés, orientés correctement, ainsi que des moyens pour contrôler les mouvements des deux ascenseurs 52 et 56.

Selon une première variante, le préhenseur 38 est configuré pour se déplacer selon uniquement les directions X₁ et Y₁. Dans ce cas, les positions des ascenseurs sont déterminées en fonction du sac saisi par le préhenseur, le premier ascenseur étant positionné de manière à permettre au préhenseur de saisir le sac et le second ascenseur étant positionnée de manière à ce que le sac saisi puisse être disposé sur la pile de sacs dépilés. Dans ce cas, la position de chaque ascenseur est ajustée quasiment à chaque sac.

Selon une autre variante, le préhenseur 38 est configuré pour se déplacer selon les directions X₁ et Y₁ et sur une faible course selon la direction Z₁, la faible course correspondant à la hauteur d'une pile. Dans ce cas, la position de chaque ascenseur est ajustée à chaque changement de couche.

Bien que décrit appliqué à des sacs vides, le dispositif de l'invention peut être utilisé pour dépiler d'autres objets empilés selon un plan de stockage comme par exemple des flans de caisses en carton stockés comme les sacs vides selon plusieurs couches, comprenant chacune plusieurs piles, chaque pile comprenant plusieurs flans empilés les uns sur les autres et orientés tous de la même manière pour chaque pile. De plus, la palette peut être remplacée par tout autre support.

## Revendications

1. Procédé de dépilage d'objets stockés selon plusieurs piles, chaque pile comprenant plusieurs objets, lesdits objets étant orientés de la même manière dans chaque pile, ledit procédé de dépilage consistant à saisir au moyen d'au moins un préhenseur (38), piloté par un système de contrôle, un par un les objets afin de les déposer selon une orientation donnée au niveau d'une sortie (38), chaque objet comprenant au moins une marque (44) positionnée de manière identique pour tous les objets, **caractérisé en ce que** le procédé consiste à utiliser des moyens de détection de marque (44) comprenant au moins un premier capteur (46) configuré pour détecter une variation d'une grandeur physique lorsqu'une marque (44) passe dans son champ de mesure, à déplacer ledit premier capteur (46) selon une trajectoire sécante avec la position théorique de la marque de l'objet de la pile en cours de dépilement afin de déterminer si la pile en cours de dépilement est terminée.

2. Procédé selon la revendication 1, **caractérisé en ce que** le premier capteur (46) est un capteur lumineux et **en ce que** la marque (44) est une marque avec un contraste de couleur par rapport au reste de la surface de l'objet sur laquelle elle est apposée.

3. Procédé selon la revendication 1 ou 2, caractérisé que le système de contrôle détermine les mouvements du préhenseur (38) en fonction d'un plan de stockage des objets comprenant plusieurs couches, chaque couche comprenant plusieurs piles.

4. Procédé selon la revendication 3, **caractérisé en ce qu'**il consiste à déterminer un décalage angulaire entre un repère du plan de stockage et un repère du dispositif de dépilage.

5. Procédé selon la revendication 4, **caractérisé en ce qu'**il consiste à utiliser les marques (44) des objets et le premier capteur (46) pour déterminer le décalage angulaire.

6. Poste d'alimentation d'un chaîne d'ensachage comprenant :
- des objets ainsi qu'un support (16) sur lequel sont stockés les objets selon plusieurs piles,
chaque pile comprenant plusieurs objets, lesdits objets étant orientés de la même manière dans chaque pile, chaque objet comprenant au moins une marque (44) positionnée de manière identique pour tous les objets,
- un dispositif de dépilage d'objets comprenant au moins un préhenseur (38) piloté par un système de contrôle de façon à saisir les objets un par un et les déposer selon une orientation donnée au niveau d'une sortie (38),
**caractérisé en ce que** le dispositif comprend au moins un premier capteur (46) solidaire du préhenseur (38) et positionné sur le préhenseur de manière à ce que son champ de mesure n'interfère pas avec l'objet saisi par le préhenseur, ledit premier capteur (46) étant configuré pour détecter une variation d'une grandeur physique lorsqu'une marque (44) passe dans son champ de mesure, ledit premier capteur (46) étant mobile selon une trajectoire sécante avec la position théorique de la marque de l'objet de la pile en cours de dépilement afin de déterminer par le système de contrôle si la pile en cours de dépilement est terminée.

7. Poste d'alimentation d'un chaîne d'ensachage selon la revendication 6, **caractérisé en ce que** le premier capteur (46) est un capteur lumineux, pour chaque objet la marque (44) ayant un contraste de couleur par rapport au reste de la surface de l'objet sur laquelle elle est apposée.

8. Poste d'alimentation d'un chaîne d'ensachage selon la revendication 6 ou 7, **caractérisé en ce que** le champ de mesure du capteur (46) est disposé sous et à la verticale dudit capteur (46).

9. Poste d'alimentation d'un chaîne d'ensachage selon l'une des revendications 6 à 8, **caractérisé en ce qu'**il comprend un deuxième capteur (46') prévu pour affiner la position du préhenseur par rapport à l'objet à saisir.

10. Poste d'alimentation d'un chaîne d'ensachage selon la revendication 9, **caractérisé en ce que** le deuxième capteur (46') est décalé par rapport au premier capteur (46) selon une direction de détection (48) sécante avec la position théorique de la marque du sac de la pile en cours de dépilement.

11. Poste d'alimentation d'un chaîne d'ensachage selon l'une des revendications 6 à 10, **caractérisé en ce qu'**il comprend un robot (50) auquel est relié le préhenseur (38), ledit robot étant configuré pour que le préhenseur (38) se déplace dans un plan horizontal au-dessus des objets, un premier ascenseur (52) permettant de soulever un support (16) sur lequel sont stockés les objets à dépiler, un second ascenseur (54) avec une plateforme (56) sur laquelle sont entassés les sacs dépilés, orientés correctement, ainsi que des moyens pour contrôler les mouvements des deux ascenseurs (52, 56).

## Patentansprüche

1. Verfahren zum Entstapeln von in mehreren Stapeln gelagerten Gegenständen, wobei jeder Stapel mehrere Gegenstände umfasst und die Gegenstände in jedem Stapel auf gleiche Weise ausgerichtet sind und wobei das Verfahren zum Entstapeln darin besteht, mittels wenigstens eines Greifers (38), der von einer Steuervorrichtung gesteuert ist, die Gegenstände nacheinander aufzunehmen, um diese im Bereich eines Ausgangs (38) in einer bestimmten Ausrichtung abzulegen, wobei jeder Gegenstand wenigstens eine Kennung (44) aufweist, die bei allen Gegenständen auf identische Weise positioniert ist, **dadurch gekennzeichnet, dass** das Verfahren darin besteht, Mittel zum Erfassen der Kennungen (44) zu verwenden, die wenigstens einen ersten Sensor (46) aufweisen, der dazu eingerichtet ist, die Änderung einer physikalischen Größe zu erfassen, wenn die Kennung (44) in sein Messfeld gelangt, und den ersten Sensor (46) entlang einer Bahn zu bewegen, die sich mit der theoretischen Position der Kennung des Gegenstands des aktuell entstapelten Stapels schneidet, um zu bestimmen, ob der aktuell entstapelte Stapel beendet ist.

2. Verfahren nach Anspruch 1, **dadurch gekennzeichnet, dass** der erste Sensor (46) ein Lichtsensor ist und dass die Kennung (44) eine Kennung ist, die zur restlichen Oberfläche des Gegenstands, auf der diese angebracht ist, einen Farbkontrast aufweist.

3. Verfahren nach Anspruch 1 oder 2, **dadurch gekennzeichnet, dass** die Steuervorrichtung die Bewegung des Greifers (38) in Abhängigkeit von einem Lagerplan der Gegenstände bestimmt, der mehrere Schichten umfasst, wobei jede Schicht mehrere Stapel umfasst.

4. Verfahren nach Anspruch 3, **dadurch gekennzeichnet, dass** dieses darin besteht, einen Winkelversatz zwischen einer Markierung des Lagerplans und einer Markierung der Entstapelvorrichtung zu bestimmen.

5. Verfahren nach Anspruch 4, **dadurch gekennzeichnet, dass** dieses darin besteht, die Kennungen (44) der Gegenstände und den ersten Sensor (46) dazu zu verwenden, den Winkelversatz zu bestimmen.

6. Zufuhreinrichtung für eine Verpackungskette mit:
- Gegenständen und einer Halterung (16), auf der die Gegenstände in mehreren Stapeln gelagert sind, wobei jeder Stapel mehrere Gegenstände umfasst und die Gegenstände in jedem Stapel auf gleiche Weise ausgerichtet sind und wobei jeder Gegenstand wenigstens eine Kennung (44) aufweist, die auf allen Gegenständen auf identische Weise positioniert ist
- einer Vorrichtung zum Entstapeln von Gegenständen mit wenigstens einem Greifer (38), der von einer Steuervorrichtung gesteuert ist, um auf diese Weise Gegenstände nacheinander aufzunehmen und sie mit einer bestimmten Ausrichtung im Bereich eines Ausgangs (38) abzulegen,
**dadurch gekennzeichnet, dass** die Vorrichtung wenigstens einen ersten Sensor (46) aufweist, der am Greifer (38) angebracht ist und auf dem Greifer derart positioniert ist, dass sein Messfeld nicht mit dem vom Greifer aufgenommenen Gegenstand wechselwirkt, wobei der erste Sensor (46) dazu eingerichtet ist, eine Änderung einer physikalischen Größe zu erfassen, wenn die Kennung (44) in sein Messfeld gelangt, und wobei der erste Sensor (46) entlang einer Bahn bewegbar ist, die sich mit der theoretischen Position der Kennung des Gegenstands des aktuell entstapelten Stapels schneidet, um über die Steuervorrichtung zu bestimmen, ob der aktuell entstapelte Stapel beendet ist.

7. Zufuhreinrichtung einer Verpackungskette nach Anspruch 6, **dadurch gekennzeichnet, dass** der erste Sensor (46) ein Lichtsensor ist, wobei bei jedem Gegenstand die Kennung (44) einen Farbkontrast bezüglich der restlichen Oberfläche des Gegenstands aufweist, auf der diese angebracht ist.

8. Zufuhreinrichtung einer Verpackungskette nach Anspruch 6 oder 7, **dadurch gekennzeichnet, dass** das Messfeld des Sensors (46) in senkrechter Richtung unter dem Sensor (46) angeordnet ist.

9. Zufuhreinrichtung einer Verpackungskette nach einem der Ansprüche 6 bis 8, **dadurch gekennzeichnet, dass** diese einen zweiten Sensor (46') aufweist, der dazu vorgesehen ist, die Position des Greifers bezüglich des aufzunehmenden Gegenstands zu verbessern.

10. Zufuhreinrichtung einer Verpackungskette nach Anspruch 9, **dadurch gekennzeichnet, dass** der zweite Sensor (46') bezüglich des ersten Sensors (46) in eine Erfassungsrichtung (48) versetzt ist, die sich mit der theoretischen Position der Kennung des Sacks des aktuell entstapelten Stapels schneidet.

11. Zufuhreinrichtung einer Verpackungskette nach einem der Ansprüche 6 bis 10, **dadurch gekennzeichnet, dass** diese einen Roboter (50) aufweist, an dem der Greifer (38) angebracht ist, wobei der Roboter dazu eingerichtet ist, dass sich der Greifer (38) in einer horizontalen Ebene oberhalb der Gegenstände bewegt, und eine erste Hebebühne (52) aufweist, die es gestattet, eine Halterung (16), auf der die zu entstapelnden Gegenstände gelagert sind, anzuheben, und eine zweite Hebebühne (54) mit einer Plattform (56) aufweist, auf der die richtig ausgerichteten Säcke aufgestapelt werden, und Mittel aufweist, um die Bewegungen der beiden Hebebühnen (52, 56) zu steuern.

## Claims

1. Method for unstacking objects stored in a number of stacks, each stack comprising a number of objects, said objects being oriented in the same way in each stack, said unstacking method consisting in grasping, by means of a gripping means (38), driven by a control system, the objects one by one in order to deposit them according to a given orientation at an exit (38), each object comprising at least one mark (44) positioned identically for all the objects, **characterized in that** the method consists in using mark detection means (44) comprising at least one first sensor (46) configured to detect a variation of a physical quantity when a mark (44) passes into its measurement field, in displacing said first sensor (46) along a trajectory secant to the theoretical position of the mark of the object of the stack currently being unstacked in order to determine whether the stack currently being unstacked is finished.

2. Method according to Claim 1, **characterized in that** the first sensor (46) is a light sensor and **in that** the mark (44) is a mark with a colour contrast relative to the rest of the surface of the object onto which it is applied.

3. Method according to Claim 1 or 2, **characterized in that** the control system determines the movements of the gripping means (38) as a function of an object storage plane comprising a number of layers, each layer comprising a number of stacks.

4. Method according to Claim 3, **characterized in that** it consists in determining an angular offset between a reference frame of the storage plane and a reference frame of the unstacking device.

5. Method according to Claim 4, **characterized in that** it consists in using the marks (44) of the objects and the first sensor (46) to determine the angular offset.

6. Supply station for a bagging chain comprising:
- objects and a support (16) on which the objects are stored in a number of stacks,
each stack comprising a number of objects, said objects being oriented in the same way in each stack, each object comprising at least one mark (44) positioned identically for all the objects,
- a device for unstacking objects comprising at least one gripping means (38) driven by a control system so as to grasp the objects one by one and deposit them according to a given orientation at an exit (38),
**characterized in that** the device comprises at least one first sensor (46) secured to the gripping means (38) and positioned on the gripping means in such a way that its measurement field does not interfere with the object grasped by the gripping means, said first sensor (46) being configured to detect a variation of a physical quantity when a mark (44) passes into its measurement field, said first sensor (46) being mobile along a trajectory secant to the theoretical position of the mark of the object of the stack currently being unstacked in order to determine, by the control system, whether the stack currently being unstacked is finished.

7. Supply station for a bagging chain according to Claim 6, **characterized in that** the first sensor (46) is a light sensor, for each object, the mark (44) having a colour contrast relative to the rest of the surface of the object onto which it is applied.

8. Supply station for a bagging chain according to Claim 6 or 7, **characterized in that** the measurement field of the sensor (46) is positioned under and vertical to said sensor (46).

9. Supply station for a bagging chain according to one of Claims 6 to 8, **characterized in that** it comprises a second sensor (46') provided to refine the position of the gripping means relative to the object to be grasped.

10. Supply station for a bagging chain according to Claim 9, **characterized in that** the second sensor (46') is offset relative to the first sensor (46) in a direction of detection (48) secant to the theoretical position of the mark of the sack of the stack currently being unstacked.

11. Supply station for a bagging chain according to one of Claims 6 to 10, **characterized in that** it comprises a robot (50) to which the gripping means (38) is linked, said robot being configured for the gripping means (38) to be displaced in a horizontal plane above the objects, a first lift (52) making it possible to raise a support (16) on which the objects to be unstacked are stored, a second lift (54) with a platform (56) on which the unstacked bags are heaped, oriented correctly and means for controlling the movements of the two lifts (52, 56).
